# EUROPEAN PATENT APPLICATION

(11) **EP 4 641 961 A1**
(43) Date of publication of application: **29.10.2025**
(21) Application number: 22968868.4
(22) Date of filing: 20.12.2022
(51) Int. Cl.: H04L 5/00, H04L 1/00, H04L 27/00

(54) **FEEDBACK METHOD AND APPARATUS, AND DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/140511
(87) International publication number: WO 2024/130566

(57) **Abstract**

Provided in the present disclosure are a feedback method and apparatus, and a device and a storage medium. The method comprises: determining whether a sidelink (SL) transmission unit of a terminal device fails to perform listen before talk (LBT) (201); and sending HARQ feedback information to a network device on the basis of a determination result (202). The method of the present disclosure can improve the stability of SL communication.

## Description

### TECHNICAL FIELD

The present disclosure relates to the field of communication technologies, and specifically to a feedback method and apparatus, a device and a storage medium.

### BACKGROUND

In a communication system, a direct communication between terminals is achieved by introducing a sidelink (SL). An R18 SL supports to operate in an unlicensed spectrum. When an SL communication is performed between the terminals via the unlicensed spectrum, before the terminals interact with each other using an SL resource, it is usually necessary to perform listen-before-talk (LBT) on the SL resource first.

### SUMMARY

The present disclosure provides a feedback method and apparatus, a device and a storage medium, to achieve a hybrid automatic repeat reQuest (HARQ) feedback of a terminal to a network device when the terminal performs listen-before-talk (LBT) on a sidelink (SL) transmission.

According to a first aspect, embodiments of the present disclosure provide a feedback method, including:
determining whether an LBT failure occurs in an SL transmission unit of the terminal; and
sending HARQ feedback information to a network device based on the determined result.

It can be seen from the above that in the present disclosure, for a scenario where the terminal performs LBT on the SL transmission, the terminal can perform the HARQ feedback to the network device based on whether the LBT failure occurs in the SL transmission unit. Thus, the network device can determine whether to schedule a resource for an SL retransmission to the terminal based on the HARQ feedback of the terminal, thereby enhancing stability of the SL communication.

According to a second aspect, embodiments of the present disclosure provide a feedback apparatus, including:
a processing module, configured to determine whether an LBT failure occurs in an SL transmission unit of the terminal; and
a transceiver module, configured to send HARQ feedback information to a network device based on the determined result.

According to a third aspect, embodiments of the present disclosure provide a terminal. The terminal includes a processor and a memory for storing a computer program. When the computer program stored in the memory is executed by the processor, the terminal is caused to perform the method in the above first aspect.

According to a fourth aspect, embodiments of the present disclosure provide a terminal. The terminal includes a processor and an interface circuit, in which the interface circuit is configured to receive code instructions and transmit the code instructions to the processor; and the processor is configured to run the code instructions to cause the terminal to perform the method in the above first aspect.

According to a fifth aspect, embodiments of the present disclosure provide a communication system. The system includes the feedback apparatus in the second aspect, or the terminal in the third aspect, or the terminal in the fourth aspect.

According to a sixth aspect, embodiments of the present disclosure provide a computer-readable storage medium, for storing instructions used by the above network device. When the instructions are executed, the terminal is caused to perform the method in the above first aspect.

According to a seventh aspect, embodiments of the present disclosure provide a computer program product including a computer program. When the computer program is running on a computer, the computer is caused to perform the method in the above first aspect.

According to an eighth aspect, embodiments of the present disclosure provide a chip system. The chip system includes at least one processor and at least one interface, configured to support the network device to perform functions as described in the first aspect, for example, to determine or process at least one of data and information in above methods. In a possible design, the chip system also includes a memory for saving a computer program and data necessary for a source secondary node. The chip system may include a chip, or a chip and other discrete devices.

According to a ninth aspect, embodiments of the present disclosure provide a computer program. When the computer program is running on a computer, the computer is caused to perform the method in the above first aspect.

### BRIEF DESCRIPTION OF THE DRAWINGS

The above and/or other aspects and advantages of embodiments of the present disclosure will become apparent and more readily appreciated from the following descriptions made with reference to the accompanying drawings.
FIG. 1 is a schematic diagram of an architecture of a communication system according to an embodiment of the present disclosure.
FIG. 2 is a flowchart of a feedback method according to an embodiment of the present disclosure.
FIG. 3a is a flowchart of a feedback method according to another embodiment of the present disclosure.
FIG. 3b is a schematic diagram of transmission times of a sidelink (SL) transmission unit according to an embodiment of the present disclosure.
FIG. 3c is a schematic diagram of transmission times of an SL transmission unit according to an embodiment of the present disclosure.
FIG. 4 is a flowchart of a feedback method according to another embodiment of the present disclosure.
FIG. 5 is a flowchart of a feedback method according to another embodiment of the present disclosure.
FIG. 6 is a flowchart of a feedback method according to another embodiment of the present disclosure.
FIG. 7 is a block diagram of a feedback apparatus according to an embodiment of the present disclosure.
FIG. 8 is a block diagram of a terminal according to an embodiment of the present disclosure.
FIG. 9 is a block diagram of a chip according to an embodiment of the present disclosure.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present disclosure. Instead, they are merely examples of apparatuses and methods consistent with aspects related to the present disclosure as recited in the appended claims.

The terms used in embodiments of the present disclosure are solely for the purpose of describing a particular embodiment and are not intended to limit the embodiments of the present disclosure. The terms "a/an" and "the" in a singular form used in the embodiments and claims of the present disclosure are also intended to include a plural form, unless the context clearly indicates other meaning. It may also be understood that the term "and/or" as used herein refers to any or all possible combinations of one or more associated listed items.

It may be understood that although the terms first, second, third, etc. may be used to describe various information in the embodiments of the present disclosure, such information should not be limited to these terms. These terms are used only to distinguish signals of the same type from one another. For example, without departing from the scope of the embodiments of the present disclosure, the first information may also be referred to as the second information, and similarly, the second information may be referred to as the first information. Depending on the context, words "if" and "in case that" used here may be interpreted as "when", "while", or "in response to determining that".

The embodiments of the present disclosure are described in detail below. Examples of the embodiments are shown in the accompanying drawings, in which the same or similar labels throughout the present embodiment represent the same or similar elements or elements having the same or similar functions. The embodiments below with reference to the accompanying drawings are exemplary and are intended to explain the present disclosure, but should not be construed as a limitation to the present disclosure.

For convenience of understanding, terms in the present disclosure will be first introduced.

### 1. Listen-before-talk (LBT)

LBT is a widely used technology in radio communication. Before starting a transmission, a radio transmitter first listens to its radio environment to detect whether a channel is idle. If the channel is busy, it waits for the channel to be idle before transmission so as to avoid a channel access conflict and achieve channel spectrum sharing.

### 2. Sidelink (SL)

SL is a link via which terminals perform direct communication.

To better understand the feedback methods in the embodiments of the present disclosure, the communication system applicable to the embodiments of the present disclosure is described first below.

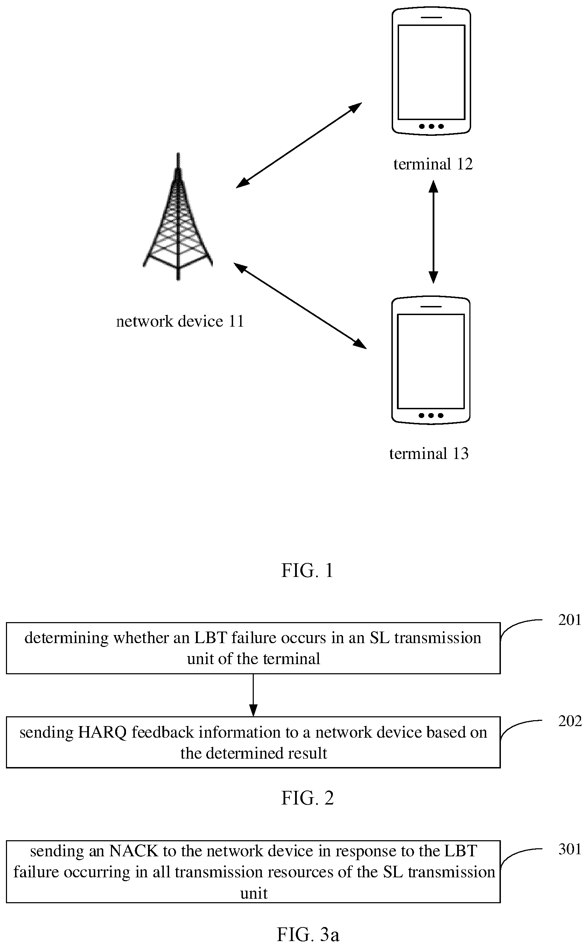

Please refer to FIG. 1, FIG. 1 is a schematic diagram of an architecture of a communication system according to an embodiment of the present disclosure. The communication system may include, but is not limited to, a network device and a terminal. The number and form of devices in FIG. 1 are only shown as an example, and do not constitute a limitation on the embodiments of the present disclosure. The communication system may include one or more network devices and one or more terminals in a practical application. The communication system in FIG. 1 including one network device 11, one terminal 12, and one terminal 13 is shown as an example.

It needs to be noted that the technical solutions of the embodiments of the present disclosure are applicable to various communication systems, for example, a long term evolution (LTE) system, a 5th generation (5G) mobile communication system, a 5G new radio (NR) system, or other new mobile communication systems in the future.

The network device 11 in the embodiments of the present disclosure is an entity on a network side for sending or receiving signals. For example, the network device 11 may be an evolved NodeB (eNB), a transmission reception point (TRP), a next generation NodeB (gNB) in an NR system, a base station in other mobile communication system in the future, or an access node in a wireless fidelity (Wi-Fi) system. The embodiments of the present disclosure do not limit a specific technology and a specific device form used by the network device. The network device according to embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal 12 and the terminal 13 in the embodiments of the present disclosure are entities on a user side for receiving or sending signals, such as a mobile phone. The terminal may also be called a terminal, a user equipment (UE), a mobile station (MS), a mobile terminal (MT), etc. The terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The embodiments of the present disclosure do not limit a specific technology and a specific device form used by the terminal.

The terminal 12 or the terminal 13 in FIG. 1 may communicate with each other via the SL. A description will be provided, for example, by taking the terminal 12 as a transmitting terminal and taking the terminal 13 as a receiving terminal. Specifically, the terminal 12 may first determine an SL resource used for SL communication and perform the SL communication with the terminal 13 based on the SL resource. There are two ways for the terminal 12 to determine the SL resource. One is a dynamic scheduling mode of the network device 11 (mode 1), and the other is an autonomous selection mode of the terminal 12 in a resource pool broadcast by the network device 11 (mode 2). When the terminal 12 determines the SL resource based on the mode 1, the terminal 12 usually needs to perform a hybrid automatic repeat reQuest (HARQ) feedback to the network device 11 according to a transmission situation of its SL resource, so that the network device 11 may determine whether the SL resource needs to be dynamically rescheduled to the terminal based on the received HARQ feedback.

It may be understood that the communication system in the embodiments of the present disclosure is to more clearly illustrate the technical solutions of the embodiments of the present disclosure, and does not constitute a limitation on the technical solutions in the embodiments of the present disclosure. Those skilled in the art may know, with evolution of the system architecture and emergence of new service scenarios, the technical solutions in the embodiments of the disclosure are also applicable to similar technical problems.

A feedback method and apparatus, a device and a storage medium in the embodiments of the present disclosure are described in detail with reference to the accompanying drawings below.

It needs to be noted that, in the present disclosure, the feedback method in any embodiment may be executed independently, any implementation in the embodiments may also be executed independently, or in combination with other embodiments, or in combination with a possible implementation in other embodiments, or in combination with any technical solution in the related art.

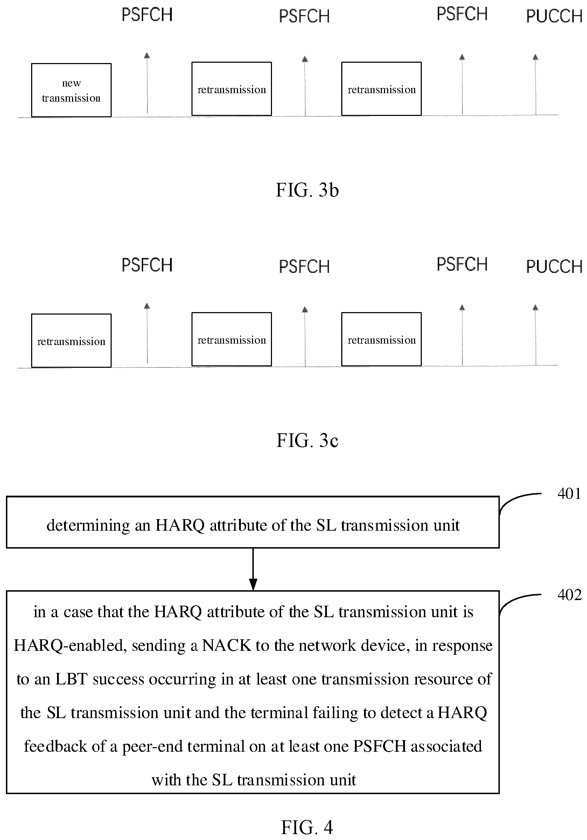

Moreover, it needs to be noted that numbers given in the examples of the embodiments of the present disclosure (such as a transmission resource of an SL transmission unit in the subsequent FIG. 3b includes once new transmission and twice retransmissions, or a transmission resource of an SL transmission unit in the subsequent FIG. 3c includes three times retransmissions) are illustrated as examples, which may also be other numbers. For example, the transmission resource of the SL transmission unit may also include four retransmissions, which is not specifically limited in the embodiments of the present disclosure.

FIG. 2 is a flowchart of a feedback method according to an embodiment of the present disclosure. The feedback method is performed by a terminal. As shown in FIG. 2, the feedback method may include following steps S201 and S202.

At S201, whether an LBT failure occurs in an SL transmission unit of the terminal is determined.

Optionally, in an embodiment of the present disclosure, the method of the embodiment in FIG. 2 is applicable to a scenario where the terminal determines that a transmission occasion (transmission resource) of its physical uplink control channel (PUCCH) is associated with an SL grant, and the terminal obtains an SL transmission unit transmitted on the SL grant from an entity (for example, multiplexing and assembly entity) of its media access control (MAC) layer (that is, the terminal needs to send the SL transmission unit to a peer-end terminal). The SL grant may be a time-frequency resource, and may include a dynamic SL grant and/or a configured SL grant. The dynamic SL grant may be understood as an SL resource dynamically scheduled by the network device for the terminal, and the configured SL grant may be understood as an SL resource configured by the network device for the terminal.

In an embodiment of the present disclosure, the SL transmission unit may be a sidelink medium access control layer protocol data unit (SL MAC PDU). The SL MAC PDU may be a data packet transmitted between terminals using the SL resource. The SL MAC PDU is only an example introduction to the SL transmission unit, which is not specifically limited in the present disclosure. Other SL transmission units used to achieve the communication between terminals should also be within the protection scope of the present disclosure.

In an embodiment of the present disclosure, a transmission resource of the SL transmission unit includes a new transmission of the SL transmission unit, and/or at least one retransmission of the SL transmission unit.

In an embodiment of the present disclosure, determining whether the LBT failure occurs in the SL transmission unit of the terminal may include: determining whether the LBT failure occurs in the SL transmission unit of the terminal, in response to the network device configuring a PUCCH resource for the HARQ feedback to the terminal and the terminal maintaining time alignment with the base station.

In an embodiment of the present disclosure, a timing advance group (TAG) where a cell corresponding to the PUCCH resource is located may be associated with a time alignment timer (TAT). During an operation of the TAT, it may be considered that the terminal maintains the time alignment with the base station. If the TAT expires, it may be considered that the terminal does not maintain the time alignment with the base station. Optionally, a timing duration of the TAT may be pre-configured by the network device, or determined independently or pre-configured by the terminal.

Optionally, in an embodiment of the present disclosure, specifically, when the network device configures a PUCCH resource for the HARQ feedback to the terminal and a TAT associated with the TAG where the cell corresponding to the PUCCH resource is located does not expire, it is determined whether an LBT failure occurs in the SL transmission unit of the terminal.

In an embodiment of the present disclosure, when the network device configures the PUCCH resource for the HARQ feedback to the terminal, it indicates that the terminal requires to perform the HARQ feedback to the network device based on a transmission situation of the SL transmission unit (the transmission situation may include: determining whether the terminal successfully transmits the SL transmission unit to the peer-end terminal by using the dynamic SL grant or the configured SL grant), so that the network device may determine whether the SL resource needs to be dynamically rescheduled to the terminal based on the HARQ feedback of the terminal.

It needs to be noted that, in an embodiment of the present disclosure, the transmission situation of the SL transmission unit of the terminal may be reflected by whether the LBT failure occurs in the SL transmission unit. When the LBT failure occurs in the SL transmission unit, it indicates that the terminal has not successfully transmitted the SL transmission unit to the peer-end terminal. When the LBT failure does not occur in the SL transmission unit, that is, the LBT is successful, it indicates that the terminal has successfully transmitted the SL transmission unit to the peer-end terminal.

In an embodiment of the present disclosure, the method for determining whether the LBT failure occurs in the SL transmission unit of the terminal may include: for the SL transmission unit, determining that an LBT success occurs in the SL transmission unit in response to the terminal not receiving an LBT failure indication (for example, an upper layer of the terminal has not received the LBT failure indication sent by the physical layer of the terminal); and determining that an LBT failure occurs in the SL transmission unit in response to the terminal receiving the LBT failure indication (for example, the upper layer of the terminal has received the LBT failure indication sent by the physical layer of the terminal).

In an embodiment of the present disclosure, the LBT failure occurring mentioned above means that the terminal fails to monitor an idle channel on the SL resource and thus the terminal is unable to send the SL transmission unit to the peer-end terminal. The LBT success mentioned above means that the terminal monitors an idle channel that may be used to send the SL transmission unit on the SL resource.

At S202, HARQ feedback information is sent to a network device based on the determined result.

In an embodiment of the present disclosure, the terminal may send the HARQ feedback information to the network device via a PUCCH resource configured by the network device.

Optionally, in an embodiment of the present disclosure, sending the HARQ feedback information to the network device based on the determined result includes:
sending a negative acknowledgement (NACK) to the network device in response to the LBT failure occurring in all transmission resources of the SL transmission unit.

Optionally, in an embodiment of the present disclosure, sending the HARQ feedback information to the network device based on the determined result includes:
determining an HARQ attribute of the SL transmission unit; and
in a case that the HARQ attribute of the SL transmission unit is HARQ-enabled, sending a NACK to the network device, in response to an LBT success occurring in at least one transmission resource of the SL transmission unit and the terminal failing to detect an HARQ feedback of a peer-end terminal on at least one physical sidelink feedback channel (PSFCH) associated with the SL transmission unit.

Optionally, in an embodiment of the present disclosure, sending the HARQ feedback information to the network device based on the determined result includes:
determining an HARQ attribute of the SL transmission unit; and
in a case that the HARQ attribute of the SL transmission unit is HARQ-disabled, sending a NACK or an acknowledgement (ACK) to the network device, in response to an LBT success occurring in at least one transmission resource of the SL transmission unit.

Optionally, in an embodiment of the present disclosure, in a case that the transmission resource of the SL transmission unit includes the at least one retransmission of the SL transmission unit, sending the HARQ feedback information to the network device based on the determined result includes:
determining an HARQ attribute of the SL transmission unit; and
in a case that the HARQ attribute of the SL transmission unit is HARQ-disabled, sending a NACK or an ACK to the network device, in response to the LBT failure occurring in all transmission resources of the SL transmission unit.

Optionally, in an embodiment of the present disclosure, sending the NACK or the ACK to the network device includes:
autonomously determining, by the terminal based on an implementation, to send the NACK or the ACK to the network device.

For a detailed introduction to the above part, please refer to introductions of the embodiments of FIGs. 3a to 6 below.

From the above, in the feedback methods provided by the present disclosure, for a scenario where the terminal performs LBT on the SL transmission, the terminal can perform the HARQ feedback to the network device based on whether the LBT failure occurs in the SL transmission unit. Thus, the network device can determine whether to schedule the resource for the SL retransmission to the terminal based on the HARQ feedback of the terminal, thereby enhancing stability of the SL communication.

FIG. 3a is a flowchart of a feedback method according to an embodiment of the present disclosure. The feedback method is performed by a terminal. As shown in FIG. 3a, the feedback method may include a following step S301.

At S301, a NACK is sent to the network device in response to the LBT failure occurring in all transmission resources of the SL transmission unit.

Optionally, in an embodiment of the present disclosure, sending the NACK to the network device in response to the LBT failure occurring in all transmission resources of the SL transmission unit may include: in response to the network device configuring a PUCCH resource for the HARQ feedback to the terminal and the terminal maintaining time alignment with the base station, sending the NACK to the network device in a case that the LBT failure occurs in all transmission resources of the SL transmission unit. For a relevant introduction of the terminal maintaining the time alignment with the base station reference may be made to the embodiments in FIG. 2 above.

Optionally, in an embodiment of the present disclosure, the method of the embodiment in FIG. 3a is applicable to a scenario where the terminal determines that a transmission occasion (transmission resource) of its PUCCH is associated with an SL grant, the terminal obtains an SL transmission unit transmitted on the SL grant from an entity (for example, multiplexing and assembly entity) of its MAC layer (that is, the terminal needs to send the SL transmission unit to a peer-end terminal), and at the same time, the LBT failure occurs in all transmission resources of the SL transmission unit, i.e., receiving the LBT failure indications for all transmission resources of the SL transmission unit. The SL grant may be a time-frequency resource, and may include a dynamic SL grant and/or a configured SL grant. The dynamic SL grant may be understood as an SL resource dynamically scheduled by the network device for the terminal, and the configured SL grant may be understood as an SL resource configured by the network device for the terminal.

In an embodiment of the present disclosure, in the embodiments corresponding to FIG. 3a, an HARQ attribute of the SL transmission unit may be HARQ-enabled or HARQ-disabled. If the HARQ attribute of the SL transmission unit is HARQ-enabled, it means that after a peer-end terminal for the terminal receives the SL transmission unit sent by the terminal, the peer-end terminal needs to perform an HARQ feedback to the terminal. If the HARQ attribute of the SL transmission unit is HARQ-disabled, it means that after the peer-end terminal for the terminal receives the SL transmission unit sent by the terminal, the peer-end terminal does not need to perform an HARQ feedback to the terminal.

In an embodiment of the present disclosure, the peer-end terminal may perform the HARQ feedback to the terminal via a PSFCH.

Optionally, in an embodiment of the present disclosure, when the LBT failure occurs in all transmission resources of the SL transmission unit, it indicates that the terminal with the resources currently used by the terminal may not successfully transmit the SL transmission unit to the peer-end terminal. At this moment, the terminal needs to send the NACK to the network device, so that the network device may dynamically reschedule an SL resource for the retransmission of the SL transmission unit to the terminal based on the NACK.

In an embodiment of the present disclosure, the transmission resource of the SL transmission unit includes a new transmission of the SL transmission unit, and/or at least one retransmission of the SL transmission unit.

Optionally, in an embodiment of the present disclosure, sending the NACK to the network device in response to the LBT failure occurring in all transmission resources of the SL transmission unit may include:
in a case that the transmission resource of the SL transmission unit includes the new transmission of the SL transmission unit and the at least one retransmission of the SL transmission unit, sending the NACK to the network device in response to the LBT failure occurring in new transmissions and all retransmissions of the SL transmission unit.

Optionally, in an embodiment of the present disclosure, one SL transmission unit may be sent multiple times. FIG. 3b is a schematic diagram of transmission times of the SL transmission unit according to an embodiment of the present disclosure. As shown in FIG. 3b, the SL transmission unit may first perform the new transmission. When the LBT failure occurs in the new transmission of the SL transmission unit, the SL transmission unit may be retransmitted using subsequent SL resources. Accordingly, when the LBT failure occurs in the new transmission and all the retransmissions of the SL transmission unit, it indicates that the terminal with the resources currently used by the terminal may not successfully transmit the SL transmission unit to the peer-end terminal. At this moment, the terminal needs to send the NACK to the network device, so that the network device may dynamically reschedule the SL resource for the retransmission of the SL transmission unit to the terminal based on the NACK. FIG. 3b shows an example that the transmission resources of the SL transmission unit include one new transmission and two retransmissions. Other numerical counts of transmission resources of the SL transmission are also acceptable, which is not specifically limited in the embodiments of the present disclosure.

For example, if the transmission of the SL transmission unit includes the new transmission of the SL transmission unit and the at least one retransmission of the SL transmission unit, as shown in FIG. 3b, it is assumed that when the LBT failure occurs in all of the new transmission and the two retransmissions of the SL transmission unit, the terminal may send the NACK to the network device.

As shown in FIG. 3b, if PSFCH resource are configured, for the HARQ-enabled SL transmission unit, the terminal monitors the HARQ feedback on the PSFCH resource associated with each new transmission and each retransmission resource to determine whether the peer-end terminal has successfully received the SL transmission unit. Moreover, if the PUCCH resource is configured, when the terminal completes the new transmission and the retransmissions of the SL transmission unit, it will also perform the HARQ feedback to the network device via the PUCCH to indicate to the network device whether the SL transmission unit has been successfully transmitted.

Optionally, in another embodiment of the present disclosure, sending the NACK to the network device in response to the LBT failure occurring in all transmission resources of the SL transmission unit may include:
in a case that the transmission resource of the SL transmission unit includes at least one retransmission of the SL transmission unit, sending the NACK to the network device in response to the LBT failure occurring in all retransmissions of the SL transmission unit.

In an embodiment of the present disclosure, the transmission resource of the SL transmission unit includes the at least one retransmission of the SL transmission unit means that the terminal fails to successfully transmit the SL transmission unit on the dynamic SL grant that is dynamically scheduled by the network device or the configured SL grant, the network device dynamically reschedules an SL resource used for the retransmission for the terminal, and the terminal performs the at least one retransmission of the SL transmission unit using the rescheduled SL resource. FIG. 3c is a schematic diagram of transmission times of an SL transmission unit according to an embodiment of the present disclosure. As shown in FIG. 3c, the terminal may retransmit the SL transmission unit three times by using the rescheduled SL resources. FIG. 3c shows an example that the transmission resources of the SL transmission unit include three retransmissions. Other numerical counts of transmission resources of the SL transmission unit are also acceptable, which is not specifically limited in the embodiments of the present disclosure.

For example, if the transmission of the SL transmission unit includes at least one retransmission of the SL transmission unit, as shown in FIG. 3c, it is assumed that the LBT failure occurs in all three retransmissions of the SL transmission unit, the terminal may send the NACK to the network device, so that the network device may dynamically reschedule the SL resource for the retransmission of the SL transmission unit to the terminal based on the NACK.

As shown in FIG. 3c, if PSFCH resources are configured, for an HARQ-enabled SL transmission unit, the terminal monitors the HARQ feedback on the PSFCH resource associated with each retransmission resource to determine whether the peer-end terminal has successfully received the SL transmission unit. Moreover, if a PUCCH resource is configured, when the terminal completes the retransmissions of the SL transmission unit, it will also perform an HARQ feedback to the network device via the PUCCH to indicate to the network device whether the SL transmission unit has been successfully transmitted.

Furthermore, in an embodiment of the present disclosure, when the transmission resource of the SL transmission unit includes at least one retransmission of the SL transmission unit, in response to the LBT failure occurring in all retransmissions of the SL transmission unit, at this moment, regardless of whether the HARQ attribute of the SL transmission unit is HARQ-enabled or HARQ-disabled, the terminal may send the ACK to the network device, instructing the network device not to reschedule a resource for the terminal. In this way, it is considered that the terminal has abandoned the transmission of the SL transmission unit.

Optionally, in an embodiment of the present disclosure, sending the NACK to the network device in response to the LBT failure occurring in all transmission resources of the SL transmission unit may include:
in a case that the transmission resource of the SL transmission unit includes the new transmission of the SL transmission unit, sending the NACK to the network device in response to the LBT failure occurring in the new transmission of the SL transmission unit.

Optionally, in an embodiment of the present disclosure, the new transmission of the SL transmission unit and/or the at least one retransmission of the SL transmission unit may be associated with an SL grant (i.e., an SL resource), the above-mentioned SL grant associated with the new transmission of the SL transmission unit and/or the at least one retransmission of the SL transmission unit may be understood as the SL grant for performing the new transmission and/or the at least one retransmission of the SL transmission unit. Furthermore, the SL grant associated with the new transmission and/or the at least one retransmission of the SL transmission unit may include at least one of:
an SL resource dynamically allocated by the network device to the terminal based on cache data reported by the terminal, i.e., a dynamic SL grant; or
an SL resource configured by the network device for the terminal, i.e., a configured SL grant.

It may be seen from the above that in an embodiment of the present disclosure, the terminal obtains the SL resource based on a dynamic scheduling mode (mode 1) of the network device.

In an embodiment of the present disclosure, the SL transmission unit may be a data packet transmitted between terminals using the SL resource. The SL transmission unit may include at least one of:
an SL transmission unit sent on a dynamic scheduled SL grant; or
an SL transmission unit sent on a configured SL grant.

The "dynamic scheduled SL grant" may be understood as an SL resource dynamically scheduled by the network device for the terminal, that is, the above dynamic SL grant. The "configured SL grant" may be understood as an SL resource configured by the network device for the terminal, that is, the above configured SL grant.

According to the above embodiments, in the feedback methods provided by the present disclosure, the NACK is sent to the network device in response to the LBT failure occurring in all transmission resources of the SL transmission unit, so that the network device can dynamically reschedule the SL resource for the retransmission of the SL transmission unit to the terminal based on the NACK. Accordingly, the terminal can retransmit the SL transmission unit based on the rescheduled SL resource, thereby improving a transmission success rate of the SL transmission unit and ensuring stability of the SL communication.

**FIG.** 4 is a flowchart of a feedback method according to an embodiment of the present disclosure. The method is performed by a terminal. As shown in FIG. 4, the feedback method may include S401 and S402.

At S401, an HARQ attribute of the SL transmission unit is determined.

In an embodiment of the present disclosure, the terminal may determine the HARQ attribute of the SL transmission unit. The HARQ attribute may include HARQ-enabled or HARQ-disabled. If the HARQ attribute of the SL transmission unit is HARQ-enabled, it means that that after a peer-end terminal for the terminal receives the SL transmission unit sent by the terminal, the peer-end terminal needs to perform an HARQ feedback to the terminal. If the HARQ attribute of the SL transmission unit is HARQ-disabled, it means that after the peer-end terminal for the terminal receives the SL transmission unit sent by the terminal, the peer-end terminal does not need to perform an HARQ feedback to the terminal.

In an embodiment of the present disclosure, the peer-end terminal may perform the HARQ feedback to the terminal via a PSFCH.

At S402, in a case that the HARQ attribute of the SL transmission unit is HARQ-enabled, a NACK is sent to the network device in response to an LBT success occurring in at least one transmission resource of the SL transmission unit and the terminal failing to detect an HARQ feedback of the peer-end terminal on at least one PSFCH associated with the SL transmission unit.

Optionally, in an embodiment of the present disclosure, the method of the embodiment in FIG. 4 is applicable to a scenario where "the terminal determines that a transmission occasion (transmission resource) of its PUCCH is associated with an SL grant, the terminal obtains an SL transmission unit transmitted on the SL grant from an entity (for example, multiplexing and assembly entity) of its MAC layer (that is, the terminal needs to send the SL transmission unit to the peer-end terminal), and at the same time, the LBT success occurs in the at least one transmission resource of an HARQ-enabled SL transmission unit, i.e., no LBT failure indication has been received for the at least one transmission resource of the HARQ-enabled SL transmission unit". The SL grant may be a time-frequency resource, and may include a dynamic SL grant and/or a configured SL grant. The dynamic SL grant may be understood as an SL resource dynamically scheduled by the network device for the terminal, and the configured SL grant may be understood as an SL resource configured by the network device for the terminal.

In an embodiment of the present disclosure, when the HARQ attribute corresponding to the SL transmission unit is HARQ-enabled, it means that after the peer-end terminal for the terminal receives the SL transmission unit sent by the terminal, the peer-end terminal needs to perform the HARQ feedback to the terminal. Accordingly, if the LBT success occurs in the at least one transmission resource of the SL transmission unit (that is, for the at least one transmission resource of the SL transmission unit, a physical layer of the terminal does not receive the LBT failure indication), and the terminal fails to detect the HARQ feedback of the peer-end terminal on the at least one PSFCH associated with the SL transmission unit, a possible situation is that the SL transmission unit has not been successfully received by the peer-end terminal. In this case, the terminal needs to send the NACK to the network device so that the network device may dynamically reschedule an SL resource for the retransmission of the SL transmission unit to the terminal based on the NACK.

**In** an embodiment of the present disclosure, each transmission resource of the SL transmission unit may be associated with at least one PSFCH resource. Accordingly, when each transmission resource of the SL transmission unit is associated with one PSFCH resource, "no HARQ feedback of the peer-end terminal is detected on at least one PSFCH associated with the SL transmission unit" means that no HARQ feedback of the peer-end terminal is detected on the PSFCH associated with each transmission resource with the LBT success. When each transmission resource of the SL transmission unit is associated with a plurality of PSFCH resources, "no HARQ feedback of the peer-end terminal is detected on at least one PSFCH associated with the SL transmission unit" means that no HARQ feedback of the peer-end terminal is detected on all of the PSFCHs associated with each transmission resource with the LBT success.

**In** an embodiment of the present disclosure, a transmission resource of the SL transmission unit includes a new transmission of the SL transmission unit, and/or at least one retransmission of the SL transmission unit.

Optionally, in an embodiment of the present disclosure, "in a case that the HARQ attribute of the SL transmission unit is HARQ-enabled, sending a NACK to the network device, in response to an LBT success occurring in at least one transmission resource of the SL transmission unit and the terminal failing to detect an HARQ feedback of a peer-end terminal on at least one PSFCH associated with the SL transmission unit" may include:
**in** a case that the transmission resource of the SL transmission unit includes a new transmission of the SL transmission unit and at least one retransmission of the SL transmission unit and the HARQ attribute corresponding to the SL transmission unit is HARQ-enabled, sending the NACK to the network device, in response to an LBT success occurring in the new transmission and/or the at least one retransmission of the SL transmission unit and the terminal failing to detect the HARQ feedback of the peer-end terminal on the at least one PSFCH associated with the SL transmission unit.

For example, if the transmission of the SL transmission unit includes the new transmission of the SL transmission unit and the at least one retransmission of the SL transmission unit, as shown in FIG. 3b, it is assumed that when an LBT success occurs in a first retransmission of the SL transmission unit, the terminal fails to detect the HARQ feedback of the peer-end terminal on at least one PSFCH associated with the first retransmission of the SL transmission unit, and then the terminal may send the NACK to the network device.

Optionally, in an embodiment of the present disclosure, "in a case that the HARQ attribute of the SL transmission unit is HARQ-enabled, sending a NACK to the network device, in response to an LBT success occurring in at least one transmission resource of the SL transmission unit and the terminal failing to detect an HARQ feedback of a peer-end terminal on at least one PSFCH associated with the SL transmission unit" may include:
in a case that the transmission resource of the SL transmission unit includes at least one retransmission of the SL transmission unit and the HARQ attribute corresponding to the SL transmission unit is HARQ-enabled, sending the NACK to the network device, in response to an LBT success occurring in the at least one retransmission of the SL transmission unit and the terminal failing to detect the HARQ feedback of the peer-end terminal on the at least one PSFCH associated with the SL transmission unit.

For example, if the transmission of the SL transmission unit includes the at least one retransmission of the SL transmission unit and the HARQ attribute of the SL transmission unit is HARQ-enabled, as shown in FIG. 3c, it is assumed that when an LBT success occurs in a second retransmission of the SL transmission unit, the terminal fails to detect the HARQ feedback of the peer-end terminal on at least one PSFCH associated with the second retransmission of the SL transmission unit, and then the terminal may send the NACK to the network device.

In addition, in an embodiment of the present disclosure, in a case that the transmission resource of the SL transmission unit includes the at least one retransmission of the SL transmission unit and the HARQ attribute corresponding to the SL transmission unit is HARQ-enabled, in response to the LBT success occurring in the at least one retransmission of the SL transmission unit and the terminal failing to detect the HARQ feedback of the peer-end terminal on the at least one PSFCH associated with the SL transmission unit, the terminal may send an ACK to the network device, instructing the network device not to reschedule a resource for the terminal. In this way, it is considered that the terminal has abandoned the transmission of the SL transmission unit.

Optionally, in an embodiment of the present disclosure, "in a case that the HARQ attribute of the SL transmission unit is HARQ-enabled, sending a NACK to the network device, in response to an LBT success occurring in at least one transmission resource of the SL transmission unit and the terminal failing to detect an HARQ feedback of a peer-end terminal on at least one PSFCH associated with the SL transmission unit" may include:
**in** a case that the transmission resource of the SL transmission unit includes a new transmission of the SL transmission unit and the HARQ attribute corresponding to the SL transmission unit is HARQ-enabled, sending the NACK to the network device, in response to an LBT success occurring in the new transmission of the SL transmission unit and the terminal failing to detect the HARQ feedback of the peer-end terminal on the at least one PSFCH associated with the SL transmission unit.

Optionally, in an embodiment of the present disclosure, each new transmission and each retransmission of the SL transmission unit may be associated with at least one PSFCH resource. Accordingly, "no HARQ feedback of the peer-end terminal is detected on at least one PSFCH associated with the SL transmission unit" means that no HARQ feedback of the peer-end terminal is detected on the PSFCH associated with each new transmission or each retransmission with an LBT success. When each transmission resource of the SL transmission unit is associated with a plurality of PSFCH resources, "no HARQ feedback of the peer-end terminal is detected on at least one PSFCH associated with the SL transmission unit" means that no HARQ feedback of the peer-end terminal is detected on all of the PSFCHs associated with each new transmission or each retransmission with an LBT success.

In addition, in an embodiment of the present disclosure, in a case that the HARQ attribute of the SL transmission unit is HARQ-enabled, in response to an LBT success occurring in at least one transmission resource of the SL transmission unit and the terminal detecting the HARQ feedback of the terminal on the at least one PSFCH associated with the SL transmission unit, the terminal may send the HARQ feedback to the network device based on the HARQ feedback it detects on the PSFCH. Specifically, if an ACK is detected in the PSFCH, the ACK will be fed back to the network; if a NACK is detected in the PSFCH, the NACK will be fed back to the network.

For example, in an embodiment of the present disclosure, if the transmission of the SL transmission unit includes the new transmission of the SL transmission unit and the at least one retransmission of the SL transmission unit, and the HARQ attribute corresponding to the SL transmission unit is HARQ-enabled, as shown in FIG. 3b, it is assumed that when an LBT success occurs in a first retransmission of the SL transmission unit, and the terminal detects a NACK on at least one PSFCH associated with the first retransmission of the SL transmission unit, the terminal may send the NACK to the network device.

For example, in an embodiment of the present disclosure, if the transmission of the SL transmission unit includes the at least one retransmission of the SL transmission unit and the HARQ attribute of the SL transmission unit is HARQ-enabled, as shown in FIG. 3c, it is assumed that when an LBT success occurs in a second retransmission of the SL transmission unit, and the terminal detects an ACK on at least one PSFCH associated with the second retransmission of the SL transmission unit, the terminal may send the ACK to the network device.

For example, in an embodiment of the present disclosure, if the transmission of the SL transmission unit includes the new transmission of the SL transmission unit and the HARQ attribute of the SL transmission unit is HARQ-enabled, it is assumed that when an LBT success occurs in the new transmission of the SL transmission unit and the terminal detects a NACK on at least one PSFCH associated with the second retransmission of the SL transmission unit, then the terminal may send the NACK to the network device.

**In** an embodiment of the present disclosure, the new transmission of the SL transmission unit and/or the at least one retransmission of the SL transmission unit may be associated with an SL grant (i.e., an SL resource), "an SL grant associated with the new transmission of the SL transmission unit and/or the at least one retransmission of the SL transmission unit" above may be understood as the SL grant for performing the new transmission and/or the at least one retransmission of the SL transmission unit. Furthermore, the SL grant associated with the new transmission and/or the at least one retransmission of the SL transmission unit may include at least one of:
an SL resource dynamically allocated by the network device to the terminal based on cache data reported by the terminal, i.e., a dynamic SL grant; or
an SL resource configured by the network device for the terminal, i.e., a configured SL grant.

It may be seen from the above that in an embodiment of the present disclosure, the terminal obtains the SL resource based on a dynamic scheduling mode (mode 1) of the network device.

In an embodiment of the present disclosure, the SL transmission unit may be a data packet transmitted between terminals using the SL resource. The SL transmission unit may include at least one of:
an SL transmission unit sent on a dynamic scheduled SL grant; or
an SL transmission unit sent on a configured SL grant.

The "dynamic scheduled SL grant" may be understood as an SL resource dynamically scheduled by the network device for the terminal, that is, the above dynamic SL grant. The "configured SL grant" may be understood as an SL resource configured by the network device for the terminal, that is, the above configured SL grant.

According to the above embodiments, in the feedback methods provided by the present disclosure, in a case that the HARQ attribute corresponding to the SL transmission unit is HARQ-enabled, the terminal can send the NACK to the network device, in response to the LBT success occurring in the at least one transmission resource of the SL transmission unit and the terminal failing to detect the HARQ feedback of the terminal on the at least one PSFCH associated with the SL transmission unit. In a case that the HARQ attribute corresponding to the SL transmission unit is HARQ-enabled, when the LBT success occurs in the at least one transmission resource of the SL transmission unit and the terminal fails to detect the HARQ feedback of the peer-end terminal on the at least one PSFCH associated with the SL transmission unit, it means that the SL transmission unit may not be successfully received by the peer-end terminal. In this case, the NACK may be sent to the network device so that the network device can dynamically reschedule the SL resource for the retransmission of the SL transmission unit to the terminal based on the NACK. Thus, the terminal can retransmit the SL transmission unit based on the rescheduled SL resource, thereby improving a transmission success rate of the SL transmission unit and ensuring stability of the SL communication.

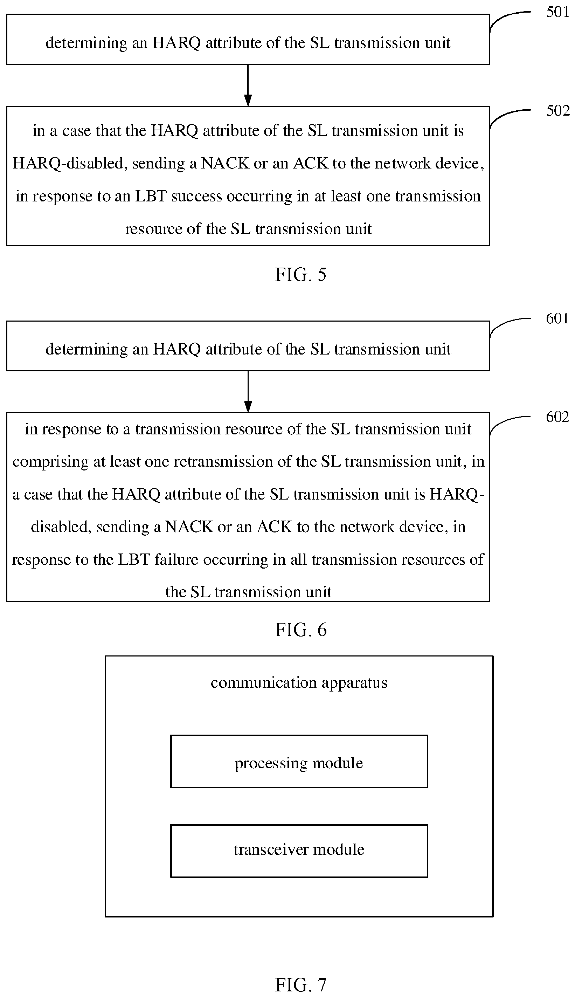

FIG. 5 is a flowchart of a feedback method according to an embodiment of the present disclosure. The method is performed by a terminal. As shown in FIG. 5, the feedback method may include S501 and S502.

At S501, an HARQ attribute of the SL transmission unit is determined.

In an embodiment of the present disclosure, the terminal may determine the HARQ attribute of the SL transmission unit. The HARQ attribute may include HARQ-enabled or HARQ-disabled. If the HARQ attribute of the SL transmission unit is HARQ-enabled, it means that that after a peer-end terminal for the terminal receives the SL transmission unit sent by the terminal, the peer-end terminal needs to perform an HARQ feedback to the terminal. If the HARQ attribute of the SL transmission unit is HARQ-disabled, it means that after the peer-end terminal for the terminal receives the SL transmission unit sent by the terminal, the peer-end terminal does not need to perform an HARQ feedback to the terminal.

It needs to be noted that, in an embodiment of the present disclosure, the peer-end terminal may perform the HARQ feedback to the terminal via a PSFCH.

**At** S502, in a case that the HARQ attribute of the SL transmission unit is HARQ-disabled, a NACK or an ACK is sent to the network device, in response to an LBT success occurring in at least one transmission resource of the SL transmission unit.

Optionally, in an embodiment of the present disclosure, the method of the embodiment in FIG. 5 is applicable to a scenario where "the terminal determines that a transmission occasion (transmission resource) of its PUCCH is associated with an SL grant, the terminal obtains an SL transmission unit transmitted on the SL grant from an entity (for example, multiplexing and assembly entity) of its MAC layer (that is, the terminal needs to send the SL transmission unit to the peer-end terminal), and at the same time, the LBT success occurs in the at least one transmission resource of an HARQ-disabled SL transmission unit, that is, no LBT failure indication is received in at least one transmission resource of the HARQ-disabled SL transmission unit". The SL grant may be a time-frequency resource, and may include a dynamic SL grant and/or a configured SL grant. The dynamic SL grant may be understood as an SL resource dynamically scheduled by the network device for the terminal, and the configured SL grant may be understood as an SL resource configured by the network device for the terminal.

In an embodiment of the present disclosure, when an HARQ attribute corresponding to the SL transmission unit is HARQ-disabled, it means that after the peer-end terminal for the terminal receives the SL transmission unit sent by the terminal, the peer-end terminal does not need to perform the HARQ feedback to the terminal.

Accordingly, if the LBT success occurs in the at least one transmission resource of the SL transmission unit (that is, for the at least one transmission resource of the SL transmission unit, a physical layer of the terminal does not receive the LBT failure indication), the terminal may only determine that it has successfully sent the SL transmission unit, but it may not determine whether the SL transmission unit is successfully received by the peer-end terminal based on the HARQ feedback of the peer-end terminal detected or not on the PSFCH as in the embodiments corresponding to FIG. 4 above. Thus, the terminal may not determine which kind of HARQ feedback information to be sent to the network device based on the HARQ feedback of the peer-end terminal detected or not on the PSFCH as in the embodiments corresponding to FIG. 4 above. In this case, the terminal may autonomously determine which kind of the HARQ feedback information to be sent to the network device based on an implementation.

Specifically, in an embodiment of the present disclosure, when the terminal determines that it will no longer request the retransmission resource from the network device (that is, the terminal determines that it will no longer retransmit the SL transmission unit), the terminal may feed back the ACK to the network device. The ACK may instruct the network device not to dynamically reschedule and retransmit the SL resource of the SL transmission unit for the terminal. When the terminal determines that it needs to request the retransmission resource from the network device again (that is, the terminal determines that it needs to retransmit the SL transmission unit again, but there is no new SL resource to retransmit the SL transmission unit in a subsequent retransmission), the terminal may feed back the NACK to the network device, so that the network device may dynamically reschedule the SL resource for the retransmission of the SL transmission unit to the terminal based on the NACK, and the terminal may retransmit the SL transmission unit using the SL resource that is dynamically scheduled.

Optionally, in an embodiment of the present disclosure, "in a case that the HARQ attribute of the SL transmission unit is HARQ-disabled, sending a NACK or an ACK to the network device, in response to an LBT success occurring in at least one transmission resource of the SL transmission unit" may include:
in a case that a transmission of the SL transmission unit includes the new transmission of the SL transmission unit and the at least one retransmission of the SL transmission unit and the HARQ attribute corresponding to the SL transmission unit is HARQ-disabled, sending the NACK or the ACK to the network device, in response to the LBT success occurring in the new transmission and/or the at least one retransmission of the SL transmission unit.

For example, in an embodiment of the present disclosure, if the transmission of the SL transmission unit includes the new transmission of the SL transmission unit and the at least one retransmission of the SL transmission unit, and the HARQ attribute corresponding to the SL transmission unit is HARQ-disabled, as shown in FIG. 3b, it is assumed that when an LBT success occurs in a second retransmission of the SL transmission unit, and the terminal determines that it will no longer request the retransmission resource from the network device, then the terminal may send the ACK to the network device; or it is assumed that when the LBT success occurs in the second retransmission of the SL transmission unit, and the terminal determines that it needs to request the retransmission resource from the network device again, the terminal may send the NACK to the network device.

For example, in an embodiment of the present disclosure, if the transmission of the SL transmission unit includes the new transmission of the SL transmission unit and the at least one retransmission of the SL transmission unit, and the HARQ attribute corresponding to the SL transmission unit is HARQ-disabled, as shown in FIG. 3b, it is assumed that when an LBT success occurs in a second retransmission of the SL transmission unit, and the terminal determines that it will no longer request the retransmission resource from the network device, the terminal may not perform the HARQ feedback to the terminal; or it is assumed that when the LBT success occurs in the second retransmission of the SL transmission unit, and the terminal determines that it needs to request the retransmission resource from the network device again, then the terminal may send the NACK to the network device.

Optionally, in an embodiment of the present disclosure, "in a case that the HARQ attribute of the SL transmission unit is HARQ-disabled, sending a NACK or an ACK to the network device, in response to an LBT success occurring in at least one transmission resource of the SL transmission unit" may include:
in a case that the transmission of the SL transmission unit includes the at least one retransmission of the SL transmission unit and the HARQ attribute corresponding to the SL transmission unit is HARQ-disabled, sending the NACK or the ACK to the network device, in response to the LBT success occurring in the at least one retransmission of the SL transmission unit.

For example, in an embodiment of the present disclosure, when the transmission of the SL transmission unit includes the at least one retransmission of the SL transmission unit and the HARQ attribute corresponding to the SL transmission unit is HARQ-disabled, as shown in FIG. 3c, it is assumed that an LBT success occurs in a second retransmission of the SL transmission unit, and the terminal determines that it will no longer request the retransmission resource from the network device, then the terminal may send the ACK to the network device; or it is assumed that the LBT success occurs in the second retransmission of the SL transmission unit, and the terminal determines that it needs to request the retransmission resource from the network device again, the terminal may send the NACK to the network device.

For example, in an embodiment of the present disclosure, when the transmission of the SL transmission unit includes the at least one retransmission of the SL transmission unit and the HARQ attribute corresponding to the SL transmission unit is HARQ-disabled, as shown in FIG. 3c, it is assumed that when an LBT success occurs in a second retransmission of the SL transmission unit, and the terminal determines that it will no longer request the retransmission resource from the network device, then the terminal may not perform the HARQ feedback to the terminal; or it is assumed that the LBT success occurs in the second retransmission of the SL transmission unit, and the terminal determines that it needs to request the retransmission resource from the network device again, the terminal may send the NACK to the network device.

Optionally, in an embodiment of the present disclosure, "in a case that the HARQ attribute of the SL transmission unit is HARQ-disabled, sending a NACK or an ACK to the network device, in response to an LBT success occurring in at least one transmission resource of the SL transmission unit" may include:
in a case that a transmission of the SL transmission unit includes the new transmission of the SL transmission unit and the HARQ attribute corresponding to the SL transmission unit is HARQ-disabled, sending the NACK or the ACK to the network device, in response to the LBT success occurring in the new transmission of the SL transmission unit.

For example, in an embodiment of the present disclosure, if the transmission of the SL transmission unit includes the new transmission of the SL transmission unit and the HARQ attribute corresponding to the SL transmission unit is HARQ-disabled, it is assumed that when an LBT success occurs in the new transmission of the SL transmission unit, and the terminal determines that it will no longer request the retransmission resource from the network device again, then the terminal may send the ACK to the network device; or it is assumed that the LBT success occurs in the new transmission of the SL transmission unit, and the terminal determines that it needs to request the retransmission resource from the network device again, the terminal may send the NACK to the network device.

For example, in an embodiment of the present disclosure, if the transmission of the SL transmission unit includes the new transmission of the SL transmission unit and the HARQ attribute corresponding to the SL transmission unit is HARQ-disabled, it is assumed that when an LBT success occurs in the new transmission of the SL transmission unit, and the terminal determines that it will no longer request the retransmission resource from the network device, the terminal may not perform the HARQ feedback to the terminal; or it is assumed that an LBT success occurs in the new transmission of the SL transmission unit, and the terminal determines that it needs to request the retransmission resource from the network device again, the terminal may send the NACK to the network device.

**In** an embodiment of the present disclosure, the new transmission of the SL transmission unit and/or the at least one retransmission of the SL transmission unit may be associated with an SL grant (i.e., SL resource), "an SL grant associated with the new transmission of the SL transmission unit and/or the at least one retransmission of the SL transmission unit" above may be understood as the SL grant of the new transmission and/or the at least one retransmission of the SL transmission unit. Furthermore, the SL grant associated with the new transmission and/or the at least one retransmission of the SL transmission unit may include at least one of:
an SL resource dynamically allocated by the network device to the terminal based on cache data reported by the terminal, i.e., a dynamic SL grant; or
an SL resource configured by the network device for the terminal, i.e., a configured SL grant.

It may be seen from the above that in an embodiment of the present disclosure, the terminal obtains the SL resource based on a dynamic scheduling mode (mode 1) of the network device.

In an embodiment of the present disclosure, the SL transmission unit may be a data packet transmitted between terminals using the SL resource. The SL transmission unit may include at least one of:
an SL transmission unit sent on a dynamic scheduled SL grant; or
an SL transmission unit sent on a configured SL grant.

The "dynamic scheduled SL grant" may be understood as an SL resource dynamically scheduled by the network device for the terminal, that is, the above dynamic SL grant. The "configured SL grant" may be understood as an SL resource configured by the network device for the terminal, that is, the above configured SL grant.

According to the embodiments above, in the feedback methods provided by the present disclosure, in a case that the HARQ attribute corresponding to the SL transmission unit is HARQ-disabled, the NACK or the ACK is sent to the network device in response to the LBT success occurring in the at least one transmission resource of the SL transmission unit. It may be seen from the above that for the scenario where the terminal performs LBT on the SL transmission, the terminal may perform the HARQ feedback to the network device based on whether the LBT failure occurs in the SL transmission unit and based on the HARQ attribute of the SL transmission unit. Thus, the network device can determine whether to schedule the resource for the SL retransmission to the terminal based on the HARQ feedback of the terminal, thereby enhancing stability of the SL communication.

FIG. 6 is a flowchart of a feedback method according to an embodiment of the present disclosure. The method is performed by a terminal, as shown in FIG. 6. The feedback method may include S601 and S602.

At S601, an HARQ attribute of the SL transmission unit is determined.

In an embodiment of the present disclosure, the terminal may determine the HARQ attribute of the SL transmission unit. The HARQ attribute may include HARQ-enabled or HARQ-disabled. If the HARQ attribute of the SL transmission unit is HARQ-enabled, it means that that after a peer-end terminal for the terminal receives the SL transmission unit sent by the terminal, the peer-end terminal needs to perform an HARQ feedback to the terminal. If the HARQ attribute of the SL transmission unit is HARQ-disabled, it means that after the peer-end terminal for the terminal receives the SL transmission unit sent by the terminal, the peer-end terminal does not need to perform the HARQ feedback to the terminal.

In an embodiment of the present disclosure, the peer-end terminal may perform the HARQ feedback to the terminal via a PSFCH.

At S602, in a case that the transmission resource of the SL transmission unit includes at least one retransmission of the SL transmission unit and the HARQ attribute of the SL transmission unit is HARQ-disabled, a NACK or an ACK is sent to the network device, in response to the LBT failure occurring in all transmission resources of the SL transmission unit.

In an embodiment of the present disclosure, when the HARQ attribute corresponding to the SL transmission unit is HARQ-disabled, it means that after a peer-end terminal for the terminal receives the SL transmission unit sent by the terminal, the peer-end terminal does not need to perform the HARQ feedback to the terminal.

Accordingly, if the LBT success occurs in the at least one transmission resource of the SL transmission unit (that is, for the at least one transmission resource of the SL transmission unit, a physical layer of the terminal does not receive the LBT failure indication), the terminal may only determine that it has successfully sent the SL transmission unit, but it may not determine whether the SL transmission unit is successfully received by the peer-end terminal based on the HARQ feedback of the peer-end terminal detected or not on the PSFCH as in the embodiments corresponding to FIG. 4 above. In this case, the terminal may autonomously determine which kind of the HARQ feedback information to be sent to the network device based on an implementation, that is, the terminal autonomously determine to send the NACK or the ACK to the network device.

For a description about "sending a NACK or an ACK to the network device" in S702 reference may be made to the content of the above embodiments in FIG. 6.

Optionally, in an embodiment of the present disclosure, the at least one retransmission of the SL transmission unit may be associated with an SL grant (i.e., an SL resource). The SL grant associated with the at least one retransmission of the SL transmission unit above may be understood as the SL grant for performing the at least one retransmission of the SL transmission unit. Furthermore, the SL grant associated with the at least one retransmission of the SL transmission unit refers to:
an SL resource for retransmission dynamically scheduled by the network device for the terminal, i.e., a dynamic SL grant.

**In** an embodiment of the present disclosure, the SL transmission unit is an SL transmission unit sent on a dynamic scheduled SL grant.

The dynamic scheduled SL grant may be understood as an SL resource dynamically scheduled by the network device for the terminal.

**In** the embodiments above, in the feedback methods provided by the present disclosure, in a case that the transmission resource of the SL transmission unit includes the at least one retransmission of the SL transmission unit and the HARQ attribute of the SL transmission unit is HARQ-disabled, the NACK or the ACK is sent to the network device, in response to the LBT failure occurring in all transmission resources of the SL transmission unit. It can be seen from the above that in the present disclosure, for the scenario where the terminal performs LBT on the SL transmission, the terminal can perform the HARQ feedback to the network device based on whether the LBT failure occurs or not in the SL transmission unit and the HARQ attribute of the SL transmission unit. Thus, the network device can determine whether to schedule the resource for the SL retransmission to the terminal based on the HARQ feedback of the terminal, thereby enhancing stability of the SL communication.

Examples of the method in the present disclosure are introduced below.

Example embodiment 1: when the terminal determines that the LBT failure occurs in all new transmission resources and retransmission resources, the terminal sends a NACK on a PUCCH.

In an embodiment: if the PUCCH is configured and a TAT associated with a TAG where a serving cell carrying a HARQ feedback is located (the service cell where the PUCCH resource for transmitting the HARQ feedback is located) does not expire, the terminal needs to send the HARQ feedback on the PUCCH.

**In** an embodiment: if an SL grant associated with the transmission occasion of the PUCCH has obtained an SL MAC PDU and the LBT failure occurs in all new transmissions and retransmissions of the SL MAC PDU on the SL grant, i.e., all new transmissions and retransmissions of the SL MAC PDU on the SL grant have received LBT failure indications from a physical layer, the terminal feeds back the NACK on the PUCCH.

In an embodiment: the SL grant may be a dynamic SL grant or a configured SL grant. The SL grant indicates a new transmission resource and a retransmission resource. The terminal operates in mode 1.

In an embodiment: the SL MAC PDU may be an HARQ-enabled SL MAC PDU or an HARQ-disabled SL MAC PDU.

Example embodiment 2: for an HARQ-enabled SL MAC PDU, when the terminal determines that at least one new transmission and/or retransmission is successful and no HARQ feedback is detected on a PSFCH associated with the at least one new transmission and/or retransmission, the terminal sends a NACK on a PUCCH.

**In** an embodiment: if an SL grant associated with a transmission occasion of the PUCCH has obtained the SL MAC PDU and at least one new transmission and/or retransmission of the SL MAC PDU on the SL grant is successfully sent, that is, the at least one new transmission and/or retransmission of the SL MAC PDU on the SL grant has not received an LBT failure indication, and no HARQ feedback is detected on the PSFCH associated with the at least one new transmission and/or retransmission, the terminal sends the NACK on the PUCCH.

In an embodiment: the SL grant may be a dynamic SL grant or a configured SL grant. The SL grant indicates a new transmission resource and a retransmission resource. The terminal operates in mode 1.

In an embodiment: when the terminal does not receive the HARQ feedback on the PSFCH, if there is only one associated PSFCH resource, the terminal determines that no HARQ feedback is received on the associated PSFCH resource. If there are a plurality of associated PSFCH resources, the terminal determines that no HARQ feedback is received on the plurality of associated PSFCH resources.

Example embodiment 3: for an HARQ-disabled SL MAC PDU, the terminal determines that at least one new transmission and/or retransmission is successful, and then the terminal sends a NACK or an ACK on the PUCCH.

In an embodiment: if an SL grant associated with a transmission occasion of the PUCCH has obtained an SL MAC PDU and at least one new transmission and/or retransmission of the SL MAC PDU on the SL grant is successfully sent, i.e., the at least one new transmission and/or retransmission of the SL MAC PDU on the SL grant has not received an LBT failure indication. When the terminal no longer requests a retransmission resource (the terminal will no longer perform retransmission), the terminal sends the NACK on the PUCCH; when the terminal determines that there is no retransmission resource for a subsequent retransmission (the terminal will perform retransmission again), the terminal sends the ACK on the PUCCH. Optionally, the terminal may determine whether it expects to perform retransmission again based on the implementations.

In an embodiment: the SL grant may be a dynamic SL grant or a configured SL grant. The SL grant indicates a new transmission resource and a retransmission resource. The terminal operates in mode 1.

Example embodiment 4: for an HARQ-enabled SL MAC PDU, the terminal determines that transmission fails for all retransmission resources, and then the terminal sends a NACK on the PUCCH.

In an embodiment: please refer to Example embodiment 1.

Example embodiment 5: for an HARQ-disabled SL MAC PDU, the terminal determines that transmission fails for all retransmission resources, and then the terminal sends a NACK or an ACK on the PUCCH.

In an embodiment: please refer to Example embodiment 3.

Example embodiment 6: for an HARQ-enabled SL MAC PDU, the terminal determines that at least one retransmission is sent successfully and no HARQ feedback is detected in a PSFCH associated with the at least one retransmission, and then the terminal sends a NACK on the PUCCH.

In an embodiment: please refer to Example embodiment 2.

Example embodiment 7: for an HARQ-disabled SL MAC PDU, the terminal determines that at least one retransmission is sent successfully, and then the terminal sends a NACK or an ACK on the PUCCH.

In an embodiment: please refer to Example embodiment 3.

FIG. 7 is a block diagram of a feedback apparatus according to an embodiment of the present disclosure. As shown in FIG. 7, the apparatus includes:
a processing module, configured to determine whether an LBT failure occurs in an SL transmission unit of the terminal; and
a transceiver module, configured to send HARQ feedback information to a network device based on the determined result.

In the embodiments, in the feedback apparatus provided in the embodiments of the present disclosure, for a scenario where the terminal performs LBT on the SL transmission, the feedback apparatus may perform the HARQ feedback to the network device based on whether the LBT failure occurs in the SL transmission unit. Thus, the network device may determine whether to schedule a resource for an SL retransmission to the feedback apparatus based on the HARQ feedback of the feedback apparatus, thereby enhancing stability of the SL communication.

Optionally, in an embodiment of the present disclosure, a transmission resource of the SL transmission unit includes a new transmission of the SL transmission unit, and/or at least one retransmission of the SL transmission unit.

Optionally, in an embodiment of the present disclosure, the transceiver module is further configured to:
send a NACK to the network device in response to the LBT failure occurring in all transmission resources of the SL transmission unit.

Optionally, in an embodiment of the present disclosure, the transceiver module is further configured to:
determine an HARQ attribute of the SL transmission unit; and
in a case that the HARQ attribute of the SL transmission unit is HARQ-enabled, send a NACK to the network device, in response to an LBT success occurring in at least one transmission resource of the SL transmission unit and the terminal failing to detect an HARQ feedback of a peer-end terminal on at least one PSFCH associated with the SL transmission unit.

Optionally, in an embodiment of the present disclosure, the transceiver module is further configured to:
determine an HARQ attribute of the SL transmission unit; and
in a case that the HARQ attribute of the SL transmission unit is HARQ-disabled, send a NACK or an ACK to the network device, in response to an LBT success occurring in at least one transmission resource of the SL transmission unit.

Optionally, in an embodiment of the present disclosure, in a case that the transmission resource of the SL transmission unit includes the at least one retransmission of the SL transmission unit, the transceiver module is further configured to:
determine an HARQ attribute of the SL transmission unit; and
in a case that the HARQ attribute of the SL transmission unit is HARQ-disabled, send a NACK or an ACK to the network device, in response to the LBT failure occurring in all transmission resources of the SL transmission unit.

Optionally, in an embodiment of the present disclosure, the transceiver module is further configured to:
autonomously determine, by the terminal based on an implementation, to send the NACK or the ACK to the network device.

Optionally, in an embodiment of the present disclosure, the processing module is further configured to:
determine whether the LBT failure occurs in the SL transmission unit of the terminal, in response to the network device configuring a PUCCH resource for the HARQ feedback to the terminal and the terminal being in time alignment.

Optionally, in an embodiment of the present disclosure, the SL transmission unit includes at least one of:
an SL transmission unit on a dynamic SL grant; or
an SL transmission unit on a configured SL grant.

Optionally, in an embodiment of the present disclosure, the transceiver module is further configured to:
send the HARQ feedback information to the network device via the PUCCH resource configured by the network device.

Optionally, in an embodiment of the present disclosure, in response to the HARQ feedback information sent to the network device being the NACK, the apparatus is further configured to:
receive an SL resource dynamically scheduled by the network device for the retransmission of the SL transmission unit.

Optionally, in an embodiment of the present disclosure, the SL transmission unit is an SL MAC PDU.

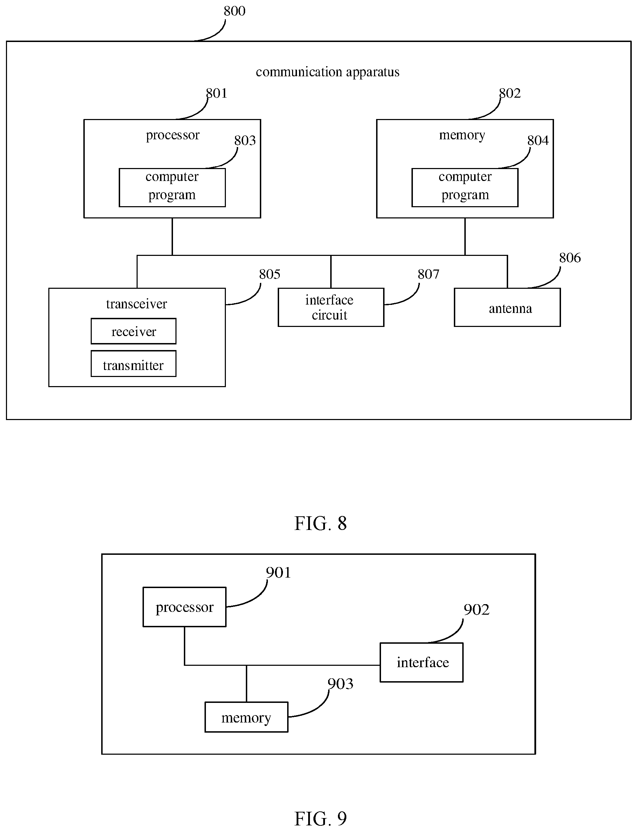

Please refer to FIG. 8, FIG. 8 is a block diagram of a terminal 800 according to an embodiments of the present disclosure. The terminal may be used to realize the methods described in above method embodiments, and reference may be made specifically to the descriptions of the above method embodiments.

The terminal 800 may include one or more processors 801. The processor 801 may be a general-purpose processor or a special-purpose processor. For example, it may be a baseband processor or a central processing unit. The baseband processor is configured to process communication protocols and communication data, and the central processor is configured to control communication devices (such as base stations, baseband chips, terminals, terminal chips, DU or CU, etc.) to execute computer programs and process computer program data.

Optionally, the terminal 800 may also include one or more memories 802 on which a computer program 804 is stored. When the computer program 804 is executed by the memory 802, the terminal 800 is caused to implement the methods in the above method embodiments. Optionally, the memory 802, may also store data. The terminal 800 and the memory 802, may be set separately or integrated together.

Optionally, the terminal 800 may also include a transceiver 805 and an antenna 806. The transceiver 805 may be called a transceiving unit, a transceiving machine, or a transceiving circuit, etc., to achieve a transceiving function. The transceiver 805 may include a receiver and a transmitter. The receiver may be called a receiver or a receiving circuit, etc., to achieve a receiving function; and the transmitter may be called a transmitter or a transmitting circuit, etc., to achieve a transmitting function.

Optionally, the terminal 800 includes one or more interface circuits 807. The interface circuit 807 is configured to receive code instructions and transmit the code instructions to the processor 801. When the code instructions are running on the processor 801, the terminal 800 is caused to implement the methods in the above method embodiments.

**In** an implementation, the processor 801 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit signals.

In an implementation, the processor 801 may store a computer program 803. When the computer program 803 is running on the processor 801, the communication device 800 is caused to implement the methods in the above method embodiments. The computer program 803 may be solidified in the processor 801. In this way, the processor 801 may be implemented in hardware.

In an implementation, the terminal 800 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The structure of the terminal in the above embodiments may not be restricted by FIG. 8. The communication device may be an independent device or part of a larger device. For example, the terminal may be:
(1) an independent IC, or a chip, or a chip system or a subsystem;
**(2)** a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the terminal may be a chip, please refer to FIG. 9, which is a block diagram of a chip. The chip in FIG. 9 includes a processor 901 and an interface 902. There may be one or more processors 901, and there may be one or more interfaces 902.

Optionally, the chip further includes a memory 903 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

The present disclosure also provides a computer readable storage medium for storing instructions. When the instructions are executed by a computer, functions of any one of the above method embodiments are performed.

The present disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another web site, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also to indicate an order of precedence.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with the examples described in embodiments of the present disclosure, units and algorithm steps may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that for a specific working process of a system, an apparatus and a unit described above reference may be made to a corresponding process in the above method embodiments, and details will not be repeated here.

The above are only implementations of the present disclosure. However, the protection scope of the present disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A feedback method, performed by a terminal, comprising:
determining whether a listen-before-talk (LBT) failure occurs in a sidelink (SL) transmission unit of the terminal; and
sending hybrid automatic repeat reQuest (HARQ) feedback information to a network device based on the determined result.

2. The method of claim 1, wherein a transmission resource of the SL transmission unit comprises a new transmission of the SL transmission unit, and/or at least one retransmission of the SL transmission unit.

3. The method of claim 1 or 2, wherein sending the HARQ feedback information to the network device based on the determined result comprises:
sending a negative acknowledgement (NACK) to the network device in response to the LBT failure occurring in all transmission resources of the SL transmission unit.

4. The method of claim 1 or 2, wherein sending the HARQ feedback information to the network device based on the determined result comprises:
determining an HARQ attribute of the SL transmission unit; and
in a case that the HARQ attribute of the SL transmission unit is HARQ-enabled, sending a NACK to the network device, in response to an LBT success occurring in at least one transmission resource of the SL transmission unit and the terminal failing to detect an HARQ feedback of a peer-end terminal on at least one physical sidelink feedback channel (PSFCH) associated with the SL transmission unit.

5. The method of claim 1 or 2, wherein sending the HARQ feedback information to the network device based on the determined result comprises:
determining an HARQ attribute of the SL transmission unit; and
in a case that the HARQ attribute of the SL transmission unit is HARQ-disabled, sending a NACK or an acknowledgement (ACK) to the network device, in response to an LBT success occurring in at least one transmission resource of the SL transmission unit.

6. The method of claim 2, wherein in a case that the transmission resource of the SL transmission unit comprises the at least one retransmission of the SL transmission unit, sending the HARQ feedback information to the network device based on the determined result comprises:
determining an HARQ attribute of the SL transmission unit; and
in a case that the HARQ attribute of the SL transmission unit is HARQ-disabled, sending a NACK or an ACK to the network device, in response to the LBT failure occurring in all transmission resources of the SL transmission unit.

7. The method of claim 5 or 6, wherein sending the NACK or the ACK to the network device comprises:
autonomously determining, by the terminal based on an implementation, to send the NACK or the ACK to the network device.

8. The method of any one of claims 1 to 7, wherein determining whether the LBT failure occurs in the SL transmission unit of the terminal comprises:
determining whether the LBT failure occurs in the SL transmission unit of the terminal, in response to the network device configuring a physical uplink control channel (PUCCH) resource for the HARQ feedback to the terminal and the terminal being in time alignment.

9. The method of any one of claims 1 to 8, wherein the SL transmission unit comprises at least one of:
an SL transmission unit on a dynamic SL grant; or
an SL transmission unit on a configured SL grant.

10. The method of any one of claims 1 to 9, wherein sending the HARQ feedback information to the network device comprises:
sending the HARQ feedback information to the network device via the PUCCH resource configured by the network device.

11. The method of any one of claims 1 to 10, wherein in response to the HARQ feedback information sent to the network device being the NACK, the method further comprises:
receiving an SL resource dynamically scheduled by the network device for the retransmission of the SL transmission unit.

12. The method of any one of claims 1 to 11, wherein the SL transmission unit is a sidelink medium access control layer protocol data unit (SL MAC PDU).

13. A feedback apparatus, comprising:
a processing module, configured to determine whether a listen-before-talk (LBT) failure occurs in a sidelink (SL) transmission unit of the terminal; and
a transceiver module, configured to send hybrid automatic repeat reQuest (HARQ) feedback information to a network device based on the determined result.

14. A terminal, comprising a processor and a memory for storing a computer program, wherein when the computer program stored in the memory is executed by the processor, the terminal is caused to implement the method of any one of claims 1 to 12.

15. A terminal, comprising a processor and an interface circuit; wherein
the interface circuit is configured to receive code instructions and transmit the code instructions to the processor; and
the processor is configured to run the code instructions to implement the method of any one of claims 1 to 12.

16. A computer readable storage medium for storing instructions, wherein when the instructions are executed, the method of any one of claims 1 to 12 is implemented.
